# EUROPÄISCHE PATENTSCHRIFT

(11) **EP 0 664 097 B1**
(45) Veröffentlichungstag und Bekanntmachung des Hinweises auf die Patenterteilung: **08.04.1998**
(21) Anmeldenummer: 95100389.6
(22) Anmeldetag: 13.01.1995
(51) Int. Cl.: A47J 27/04, A47J 27/16

(54) **Vorrichtung zur Regelung der Heizleistung bei einem Gar- oder Backgerät**
Device for controlling heating capacity of a cooking- or baking apparatus
Dispositif pour le réglage de la puissance de chauffage d'un appareil de cuisson ou d'un appareil à frire

(30) Priorität: 21.01.1994 DE 4401642
(43) Veröffentlichungstag der Anmeldung: 26.07.1995
(73) Patentinhaber: Gaggenau-Werke Haus- und Lufttechnik GmbH, D-76571 Gaggenau (DE)
(72) Erfinder: Damrath, Joachim, Dr., D-76571 Gaggenau (DE); Anschütz, Eduard, D-76571 Gaggenau (DE); Bauer, Kurt, D-76596 Forbach (DE); Bastian, Emil, D-76571 Gaggenau (DE); Kleinbub, Guido, D-76571 Gaggenau (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 165 187
- EP-A- 0 279 065
- WO-A-86/04221
- DE-A- 3 639 872
- DE-A- 3 909 283
- DE-C- 3 518 498
- GB-A- 2 218 328

## Beschreibung

Die Erfindung betrifft eine Vorrichtung zur Regelung der Heizleistung bei einem Gar- oder Backgerät mit einer mit dem Heizelement in Verbindung stehenden Regeleinrichtung und mit einem Temperatursensor in einer aus dem Gar- bzw. Backraum führenden Auslaßleitung.

Durch die DE-39 09 283 A1 ist ein Dampfgargerät bekannt geworden, bei dem mit einem Temperaturfühler die Temperatur der aus dem Garraum abströmenden Dampf-Luft-Mischströmung im Bereich der Mündung der Auslaßleitung abgetastet und danach die Wasserzufuhr zur Einspritzdüse über ein Ventil gesteuert wird. Durch diese Maßnahme soll das Ausströmen von Dampf vermieden werden und zwar dadurch, daß bei höherem Dampfanteil in der Auslaßleitung kaltes Frischwasser in den Dampfauslaß eingesprüht wird.

Zum bekannten Stande der Technik gehört ferner ein Gargerät nach der DE 36 39 872 A1. Diese beschreibt die Anordnung eines Dampffühlers in einer Dampfauslaßöffnung, der durch die austretende Dampffahne den Dampferzeuger abschaltet. Dadurch soll eine schnelle Regelung der Dampferzeugung erreicht werden. Der Abstand des Dampffühlers von der Dampfauslaßöffnung ist veränderbar ausgebildet, so daß die Dampferzeugung nur gerade so groß gehalten werden kann, daß der Wärmeübergang optimal und der Wasserverbrauch so gering wie möglich ist. Der Dampffühler ist dabei in einem durch ein Gebläse zwangsweise angefachten Kühlluftstrom angeordnet.

Bekannt ist ferner aus der DE 35 18 498 C1 eine Vorrichtung zur Regelung einer Wärmebehandlung von Nahrungsmitteln mit einer Steuerung, die in Abhängigkeit von den Meßwerten eines Meßfühlers die Dampfproduktion regelt. Wenn der in den Garraum einströmende Dampf sich nicht mehr an den Speisen niederschlägt oder kondensiert, steigt der Druck im Garraum, so daß schließlich die Druckdifferenz zwischen der Garraummündung und der Umgebung aufgehoben wird. Damit dringt Garraumatmosphäre in die Verbindungsöffnung nach außen, und der Meßfühler erfaßt die erhöhte Temperatur der Garraumatmosphäre und schaltet das Heizelement ab.

Zum Stande der Technik gehört ferner ein Gerät zum Erwärmen von Speisen mit Dampf nach der europäischen Patentanmeldung 0 279 065. Dabei tritt die Garraumatmosphäre durch eine Auslaßöffnung in einem mit einem Gebläse verbundenen Abluftkanal ein, wobei sich in der durch ein Gebläse zwangsweise hervorgerufenen Abluftströmung ein Temperatursensor befindet. Dieser schaltet das Heizelement bei Erreichen einer bestimmten oberen Temperatur ab. Der Temperatursensor wird danach durch den Zwangsluftstrom schnell abgekühlt. Sobald durch die reduzierte Beheizung des Dampferzeugers die Dampfmenge absinkt, wird der Dampf den Temperaturfühler nicht mehr erreichen sondern nur noch die Zwangsluftströmung, und diese führt eine schnelle Abkühlung zum erneuten Einschalten der Heizung herbei. Der Zwangsluftstrom beeinflußt den aus der Auslaßöffnung zunächst in geringer Menge ausströmenden Dampf. Erst bei hohem Dampfüberschuß kann deshalb der Dampf den Temperaturfühler erreichen und so beeinflussen, daß die Beheizung des Dampferzeugers reduziert oder abgeschaltet wird.

Die Erfindung geht von der Aufgabenstellung aus, bei einer Dampfgarvorrichtung die Heizleistung so zu regeln, daß sich auch bei Wassertemperaturen im Bereich der Siedetemperatur die erzeugte Dampfmenge regeln läßt. Bei der Verwendung für ein Backgerät soll die Heizleistung den Erfordernissen des Backvorganges bestmöglich angeglichen werden.

Die Lösung dieser Aufgabestellung erfolgt dadurch, daß der Temperatursensor über eine erste Kontaktfläche mit dem aus dem Gar- bzw. Backraum abströmenden Dampf bzw. Dampf-Luftgemisch und über eine zweite Kontaktfläche zur Wärmeabgabe an die Umgebung derart in Verbindung steht, daß sich am Temperatursensor eine Temperatur unterhalb der Temperatur des abströmenden Dampfes bzw. Dampf-Luftgemisches als Sensortemperatur einstellt und daß diese Sensortemperatur die Istwertgröße für die Regelung der Heizleistung durch die Regeleinrichtung bildet.

Üblicherweise werden Temperatursensoren ohne absichtliche Wärmeabgabe an die Umgebung so ausgebildet und eingesetzt, daß an ihnen die gleiche Temperatur herrscht wie in dem sie umgebenden zu messenden Medium. Da sich an einem ausschließlich von Wasserdampf umgebenen Temperatursensor, unabhängig von der pro Zeiteinheit erzeugten Dampfmenge, immer Siedetemperatur einstellt, sind solche Meßfühler zur Messung von Dampfmengen ungeeignet. Es hat sich nun gezeigt, daß an einem Temperatursensor, der durch eine erste Kontaktfläche mit dem Dampf und mit einer zweiten Kontaktfläche zur Kühlung mit der Umgebung in Verbindung steht, sich eine Temperatur einstellt, die unterhalb der Temperatur des Dampfes liegt. Im Rahmen der Erfindung wurde eine Abhängigkeit dieser Temperatur von der erzeugten Dampfmenge gefunden, die zur Regelung der Heizleistung des Heizelementes genutzt werden kann. Somit ist es nun bei Dampfgarvorrichtungen möglich, die Dampfentwicklung und die auf das Einsatzgut einwirkende Wärmemenge bei siedendem Wasser zu regeln. Obwohl die Temperatur des Dampfes stets der Siedetemperatur entspricht, kann mit der erfindungsgemäßen Regeleinrichtung eine Temperatur als Meßgröße zur Dampfmengenregelung erzeugt werden, die unmittelbar von der erzeugten Dampfmenge abhängig ist.

In einer bevorzugten Ausführungsform steht der Temperatursensor mit außerhalb des Dampfgarbeckens bzw. des Garraumes angeordneten metallischen Bauteilen oder der Umgebungsluft bzw. mit einem besonderen Kühlelement in gut wärmeleitender Verbindung. Als Kühlelemente können die bekannten Luftkühlelemente, z.B. Rippenkörper, vorteilhaft verwendet werden. Dadurch kann auch bei sehr großen Dampfmengen eine Abkühlung des Temperatursensors unter die Siedetemperatur erreicht werden.

Es kann ferner zweckmäßig sein, den Temperatursensor in Strömungsrichtung hinter einer Dampfauslaßöffnung anzuordnen. Unmittelbar hinter der Dampfauslaßöffnung weist der Dampf eine relativ große von der erzeugten Dampfmenge abhängige Strömungsgeschwindigkeit auf. Die sich an dem Sensor einstellende Temperatur ist aber von der auf ihn übertragenen Wärmemenge pro Zeiteinheit und damit von der Strömungsgeschwindigkeit abhängig. Die Temperatur am Sensor reagiert deshalb auf die erzeugte Dampfmenge sehr empfindlich.

In einer konstruktiv besonders einfachen, bevorzugten Ausführungsform kann vorgesehen sein, daß sich die Dampfauslaßöffnung in der Wand des in einem Gehäuse der Dampfgarvorrichtung angeordneten Dampfgarbeckens befindet. Der Temperatursensor ist dabei am Anfang einer sich an die Dampfauslaßöffnung anschließenden rohrförmigen Kondensationsstrecke angeordnet. In gleicher Weise kann die Anordnung des Temperaturfühlers auch bei einem Backofen im Bereich der Garraumaustrittsöffnung gewählt werden.

Bei Dampfgarvorrichtungen kann es zweckmäßig sein, das Heizelement in bekannter Weise als elektrische Widerstandsheizung auszubilden und an der Unterseite des Bodens des Füllraumes der Garvorrichtung anzubringen.

In einer vorteilhaften Ausgestaltung der Erfindung ist die Dampfgarvorrichtung ein Kücheneinbaugerät, das mit Anschlüssen für einen Wassereinlauf und einen Wasserablauf versehen ist. Um eine im wesentlichen konstante Wasserhöhe im Füllraum während des Garens zu erreichen, kann es ferner zweckmäßig sein, einen selbsttätig gesteuerten Wassereinlauf vorzusehen. Dieser kann gegebenenfalls durch einen im Füllraum angeordneten Wasserstandshöhendetektor gesteuert werden, der den Wassereinlauf öffnet, wenn die Füllhöhe unter ein Minimum fällt.

Die Erfindung soll nachfolgend anhand eines Ausführungsbeispiels bei einer Dampfgarvorrichtung dargestellt werden.

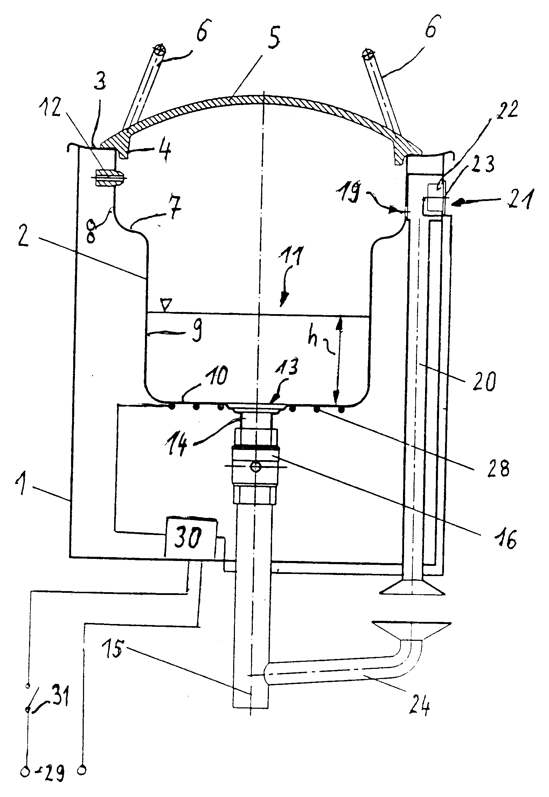

Die in der Figur gezeigte Dampfgarvorrichtung weist ein in einem Gehäuse 1 angeordnetes Dampfgarbecken 2 auf. Das Dampfgarbecken 2 liegt mit einem flanschartigen oberen Randteil 3 auf dem oberen Rand der Seitenwand des Gerätes 1 auf. Ein mit einer umlaufenden Nut 4 versehener Glasdeckel 5 übergreift den oberen Randteil 3 des Dampfgarbeckens 2. Zur Handhabung ist der Glasdeckel 5 mit zwei Griffen 6 versehen.

Das Dampfgarbecken besteht aus einem oberen zylinderförmigen Wandteil 8, der durch einen im wesentlichen horizontal verlaufenden Absatz 7 mit einem unteren ebenfalls zylinderförmigen Wandteils 9 von geringerem Durchmesser einstückig verbunden ist. Der Absatz 7 dient z.B. zur Auflage eines nicht dargestellten Gargutträgers.

In einem durch einen Boden 10 und durch den unteren Wandteil 9 gebildeten Füllraum befindet sich Wasser mit der Füllstandshöhe h, das durch einen am oberen Wandteil 8 angeordneten Wassereinlauf 12 eingefüllt wird. Die als Kücheneinbaugerät ausgebildete Dampfgarvorrichtung weist etwa in der Mitte des Bodens 10 eine Öffnung 13 auf, die in einen Stutzen 14 als Wasserablauf mündet. Zwischen dem Stutzen 14 und einem Ablaufrohr 15 ist ein Absperrventil 16 angeordnet.

Das Dampfgarbecken 2 ist in seinem oberen Wandteil 8 mit einer Dampfauslaßöffnung 19 versehen, die in eine rohrförmige, vertikal abwärts gerichtete Kondensationsstrecke 20 mündet. Die Kondensationsstrecke 20 ist mit ihrem oberen Ende zwischen dem oberen Wandteil 8 und dem Gehäuse 1 angeordnet.

Ein Temperatursensor 21 befindet sich mit seinem Meßteil 22 im oberen Ende der Kondensationsstrecke 20. Das Meßteil 22 (erste Kontaktfläche) ist dabei durch eine Öffnung im Gehäuse 1 hindurchgesteckt und über ein scheibenförmiges Befestigungsteil 23 (zweite Kontaktfläche) des Temperatursensors 21 mit der Außenwand des Gehäuses 1 verbunden, die mit der Umgebungsluft in Verbindung steht. Die Kondensationsstrecke 20 ragt mit ihrem sich kegelförmig öffnenden unteren Ende aus dem Gehäuse 1.

In Abstand gegenüber dem unteren Ende der Kondensationsstrecke 20 ist ein trichterförmiger Auffangteil eines Kondensatablaufrohres 24 angebracht, der in das Ablaufrohr 15 mündet.

An der Unterseite des Bodens 10 ist ein elektrisches Widerstandsheizelement 28 angeordnet, das über einen Netzspannungsanschluß 29 gespeist wird. Das Widerstandsheizelement 28 und der Spannungsanschluß 29 sind mit einer Regeleinrichtung 30 verbunden, die als weitere Bauteile den Temperatursensor 21 und einen Schalter 31 aufweist.

Die Größe der Dampfauslaßöffnung 19 ist so auf die maximal durch den Wassereinlauf 12 in das Dampfgarbecken 2 einströmende Menge des Wassers abgestimmt, daß sie als Wasserüberlauf benutzt werden kann.

Nachdem durch den Wassereinlauf 12 bei geschlossenem Absperrventil 16 Wasser in den Füllraum 11 eingefüllt, der Gargutträger mit dem Einsatzgut in das Dampfgarbecken 2 eingesetzt sowie der Deckel 5 auf den oberen Rand 3 aufgesetzt wurde, wird das Widerstandsheizelement 28 mit dem Schalter 31 eingeschaltet. Die gewählte Heizleistung entspricht dabei einer bestimmten Soll-Dampfmenge. Nachdem das Wasser siedet, entweicht Dampf aus der Dampfauslaßöffnung 19 und strömt an dem Temperatursensor 21 vorbei in die Kondensationsstrecke 20. Dort kondensiert der Wasserdampf und läuft über das Kondensatablaufrohr 24 in das Ablaufrohr 15 ab.

Der Dampf erwärmt den mit seinem Befestigungsteil 23 mit dem Gehäuse 1 und damit mit der Umgebung in Verbindung stehenden Temperatursensor 21, an dem sich dadurch eine Temperatur einstellt, die unterhalb der Dampftemperatur liegt. Der Temperatursensor 21 erzeugt ein seiner Temperatur zugeordnetes elektrisches Signal, welches der Regeleinrichtung 30 zugeführt wird und so bei einer bestimmten Dampfmenge die Beheizung abschaltet.

Die vorliegende Regeleinrichtung erscheint auch zur Regelung des Gar- oder Backvorganges bei einem Mikrowellenheizgerät vorteilhaft anwendbar.

## Patentansprüche

1. Vorrichtung zur Regelung der Heizleistung bei einem Gar- oder Backgerät mit einer mit dem Heizelement (28) in Verbindung stehenden Regeleinrichtung (30) und mit einem Temperatursensor (21) in einer aus dem Gar- bzw. Backraum führenden Auslaßleitung (20), **dadurch gekennzeichnet,** daß der Temperatursensor (21) über eine erste Kontaktfläche (22) mit dem aus dem Gar- bzw. Backraum abströmenden Dampf- bzw. Dampf-Luftgemisch und über eine zweite Kontaktfläche (23) zur Wärmeabgabe an die Umgebung derart in Verbindung steht, daß sich am Temperatursensor (21) eine Temperatur unterhalb der Temperatur des abströmenden Dampfes bzw. Dampf-Luftgemisches als Sensortemperatur einstellt und daß diese Sensortemperatur die Istwertgröße für die Regelung der Heizleistungen durch die Regeleinrichtung (30) bildet.

2. Vorrichtung nach Anspruch 1, **dadurch gekennzeichnet,** daß der Temperatursensor (21) mit einem Kühlelement wärmeleitend in Verbindung steht.

3. Vorrichtung nach Anspruch 2, **dadurch gekennzeichnet,** daß das Kühlelement als Luftkühlelement ausgebildet ist.

4. Vorrichtung nach Anspruch 1, **dadurch gekennzeichnet,** daß der Temperatursensor (21) hinter einer Dampfauslaßöffnung (19) angeordnet ist.

5. Vorrichtung nach Anspruch 4, **dadurch gekennzeichnet,** daß sich die Dampfauslaßöffnung (19) in der Wand eines in einem Gehäuse (1) angeordneten Dampfgarbeckens (2) befindet.

6. Dampfgarvorrichtung unter Verwendung einer Regeleinrichtung nach Anspruch 1, **dadurch gekennzeichnet,** daß das Heizelement ein an der Unterseite des Bodens (10) des Füllraumes der Dampfgarvorrichtung angeordnetes elektrisches Widerstandsheizelement (28) ist.

7. Vorrichtung nach Anspruch 6, **dadurch gekennzeichnet,** daß der Deckel (5) aus durchsichtigem Material gebildet ist.

8. Vorrichtung nach Anspruch 6, **dadurch gekennzeichnet,** daß die Dampfgarvorrichtung als ein mit Anschlüssen für einen Wassereinlauf (12) und einen Wasserablauf (13) versehenes Kücheneinbaugerät ausgebildet ist.

9. Vorrichtung nach Anspruch 6, **dadurch gekennzeichnet,** daß bei einer Dampfgarvorrichtung die Größe der Dampfauslaßöffnung (19) und deren Anordnung in der Wand des Dampfgarbeckens (2) so gewählt ist, daß sie einen Wasserüberlauf bildet.

10. Vorrichtung nach Anspruch 6, **dadurch gekennzeichnet,** daß der Wassereinlauf (12) von der Füllhöhe selbsttätig steuerbar ist.

11. Vorrichtung nach Anspruch 6, **dadurch gekennzeichnet,** daß sich hinter dem Temperatursensor (21) eine Kondensationsstrecke (20) anschließt.

## Claims

1. A device for controlling the heating power of a cooking or baking apparatus with a control device (30) connected to the heating element (28) and a temperature sensor (21) in an outlet pipe (20) leading from the cooking or baking chamber, characterised in that the temperature sensor (21) is connected via a first contact face (22) to the steam or steam air mixture flowing out of the cooking or baking chamber and via a second contact face (23) for the emission of heat to the environment in such a way that the temperature sensor (21) assumes a temperature which is below the temperature of the outflowing steam or steam air mixture, wherein said sensor temperature forms the base value for regulating the heating power with the control device (30).

2. A device according to claim 1, characterised in that the temperature sensor (21) is connected to a cooling element in a heat conducting manner.

3. A device according to claim 2, characterised in that the cooling element is in the form of an air cooling element.

4. A device according to claim 1, characterised in that the temperature sensor (21) is arranged behind a steam outlet opening (19).

5. A device according to claim 4, characterised in that the steam outlet opening (19) is located in the wall of a steam cooking bowl arranged in a housing (1).

6. A steam cooking device using the control device according to claim 1, characterised in that the heating element is an electric resistance claim 1, characterised in that the heating element is an electric resistance heating element (28) arranged underneath the base (10) of the filling chamber of the steam cooking device.

7. A device according to claim 6, characterised in that the lid (5) is made from a transparent material.

8. A device according to claim 6, characterised in that the steam cooking device is in the form of a built-in kitchen device provided with connection points for a water inlet (12) and a water outlet (13).

9. A device according to claim 6, characterised in that in a steam cooking device the size of the steam outlet opening (19) and its arrangement in the wall of the steam cooking bowl (2) is such that it forms a water overflow.

10. A device according to claim 6, characterised in that the water inlet (12) is automatically controllable by the filling level.

11. A device according to claim 6, characterised in that a condensation line (20) is connected downstream of the temperature sensor (21).

## Revendications

1. Dispositif de réglage de la puissance de chauffage d'un appareil de cuisson, comportant un équipement de régulation (30) relié à l'élément chauffant (28) et un capteur de température (21) dans une conduite de sortie (20) partant de l'espace de cuisson, caractérisé par le fait que le capteur de température (21) est en liaison par une première surface de contact (22) avec la vapeur ou le mélange air-vapeur qui sort de l'espace de cuisson et par une deuxième surface de contact (23) pour la cession de chaleur à l'atmosphère extérieure, ce de façon telle que sur le capteur de température (21) s'établisse comme température de capteur une température inférieure à la température de la vapeur ou du mélange air-vapeur qui sort, et que cette température de capteur constitue la grandeur de valeur instantanée pour le réglage de la puissance de chauffage par l'équipement de régulation (30).

2. Dispositif selon la revendication 1, caractérisé par le fait que le capteur de température (21) est en liaison de conduction de chaleur avec un élément de refroidissement.

3. Dispositif selon la revendication 2, caractérisé par le fait que l'élément de refroidissement est un élément de refroidissement à l'air.

4. Dispositif selon la revendication 1, caractérisé par le fait que le capteur de température (21) est placé derrière un orifice de sortie de vapeur (19).

5. Dispositif selon la revendication 4, caractérisé par le fait que l'orifice de sortie de vapeur (19) se trouve dans la paroi d'un bassin de cuisson à la vapeur (2) placé dans une enveloppe (1).

6. Dispositif de cuisson à la vapeur comportant un équipement de régulation selon la revendication 1, caractérisé par le fait que l'élément chauffant est un élément chauffant par résistance (28) placé sur la face inférieure du fond (10) de l'espace de remplissage du dispositif de cuisson à la vapeur.

7. Dispositif selon la revendication 6, caractérisé par le fait que le couvercle (5) est en matière transparente.

8. Dispositif selon la revendication 6, caractérisé par le fait que c'est un appareil encastré de cuisine pourvu de raccords pour une entrée d'eau (12) et une sortie d'eau (13).

9. Dispositif selon la revendication 6, caractérisé par le fait que dans le cas d'un dispositif de cuisson à la vapeur, la grandeur de l'orifice de sortie de vapeur (19) et le placement de celui-ci dans la paroi du bassin de cuisson à la vapeur (2) sont choisis de façon qu'il forme un trop-plein d'eau.

10. Dispositif selon la revendication 6, caractérisé par le fait que l'entrée d'eau (12) peut être commandée automatiquement par la hauteur de remplissage.

11. Dispositif selon la revendication 6, caractérisé par le fait que derrière le capteur de température (21) est montée une voie de condensation (20).
